Europäisches Patentamt

European Patent Office

Office européen des brevets

(19)

(11) Publication number: **0 197 618**
**B1**

(12)

# EUROPEAN PATENT SPECIFICATION

(45) Date of publication of the patent specification:
05.09.90

(21) Application number: 86200602.0

(22) Date of filing: 10.04.86

(51) Int. Cl.⁵: **C08L 101/00**, C08L 67/06,
C08J 3/24
// (C08L67/06, 67:06)

(54) Moulding compound based on thermosetting resin material containing fibres.

(30) Priority: 11.04.85 NL 8501059

(43) Date of publication of application:
15.10.86 Bulletin 86/42

(45) Publication of the grant of the patent:
05.09.90 Bulletin 90/36

(84) Designated Contracting States:
BE DE FR GB IT NL SE

(56) References cited:
EP-A- 0 101 654
DE-A- 2 061 830
DE-A- 2 938 721
FR-A- 1 511 352
US-A- 3 780 141
US-A- 4 260 538

(73) Proprietor: DSM RESINS BV, Ceintuurbaan 5,
NL-8022 AW Zwolle(NL)

(72) Inventor: Van Gasse, Rene Leopold Eduard,
Lietenstraat 19, B-3600 Opglabbeek(BE)
Inventor: Verwer, Andreas Nicolaas Jacobus,
Ecrivissestraat 61, NL-6191 CJ Beek(NL)

(74) Representative: Hoogstraten, Willem Cornelis Roeland
et al, OCTROOIBUREAU DSM Postbus 9, NL-6160 MA
Geleen(NL)

## Description

The invention relates to a moulding compound based on thermosetting resin material, fibres, fillers and curing catalysts and further usual additives.

Moulding compounds based on thermosetting material are, for instance, Sheet Moulding Compounds (SMC), Bulk Moulding Compounds (BMC), Dough Moulding Compounds (DMC) and free-flowing solid moulding compounds, such as moulding powders, moulding granulates or moulding flakes, etc.

The relating processing techniques are known, inter alia, from the Kunststoffhandbuch, volume 8, Polyester by Vieweg and Goerden, pages 482, 491 and 495 and from the papers read during the '13th Offentliche Jahrestag der Arbeitsgemeinschaft Verstärkte Kunststoffen' held at Freudenstadt from 5th till 7th October 1976.

Said moulding compounds can be processed via injection moulding, transfer moulding, compression moulding, pulltrusion, combinations of injection moulding and compression moulding, etc.

In the application of such moulding compounds great value is attached to the non-porousness and smoothness of the surface. The automobile industry, for instance, makes demands on the non-porousness and smoothness of the surface, which must at least come up to the quality of steel. At the same time the costs of the proposed solutions for the surface problems must also be reckoned with, since these must not be too high. There must be no fibres, e.g. glass fibres, direct at the surface of moulding compounds that must conform with high standards in respect of the surface.

The object of the invention is to provide a moulding compound based on a thermosetting resin material, fibres, fillers and curing catalysts and further usual additives, resulting in mouldings having a nonporous and smooth surface.

The moulding compound according to the invention is characterized in that the moulding compound comprises a mixture of at least two thermo-setting resins, of which one resin being coated on fibers, is in a partly cured state, and dispersed into a second resin which is not, or less than the first resin in a partly cured state.

A resin in a partly cured state is also called a 'B-stage' resin.

According to the invention the mixture contains a partly cured resin with a viscosity higher than 50,000 Pas (measured at 20⨯C) and another resin with a viscosity lower than 100 Pas (measured at 150⨯C).

The viscosities are measured with a Brookfield Viscometer (type HBT).

The viscosity of the partly cured resin is preferably between 50,000 and 1,000,000 Pas, while the viscosity of the second resin is between 0.5 and 100 Pas.

According to a further preferred realization the viscosity of the partly cured resin is between 100,000 and 500,000 Pas and the viscosity of the second resin between 1 and 10 Pas.

The proportion of the components of the moulding compounds may vary within wide limits, depending on the ultimate use. According to a preferred realization the two thermosetting resins are used in a weight ratio between 5 : 95 and 95 : 5.

According to a further preferred realization the two thermosetting resins are used in a weight ratio between 1 : 4 and 4 : 1.

The fibres are applied in the resin that is in the higher partly cured state. Preferably glass fibres are applied.

According to a specific mode of realizing the invention the moulding compound consists of free-flowing ('rieselfähige') solid particles. This moulding compound preferably consists of a mixture consisting of free-flowing solid particles of partly cured thermosetting resin with fibre, preferably glass fibre, and optionally with fillers and further usual additives and of free-flowing solid particles of a powdery thermosetting resin with optionally fillers, curing catalysts and further usual additives with a viscosity lower than that of the particles of the partly cured thermosetting resin.

Preferably the powdery thermosetting resin with optionally fillers, curing catalysts and further usual additives has a higher curing reactivity than the partly cured thermosetting resin with fibres, and with optionally fillers and further usual additives.

The curing reactivity can be determined by the method described in 'SPI-procedures for running exotherm curves-polyester resins', (September 1960) and is expressed in minutes or seconds.

According to another specific mode of realizing the invention the moulding compound has the form of an SMC, BMC, DMC, moulding powders, moulding granulates or moulding flakes, the matrix of the compound consisting mainly of partly cured thermosetting resin with fibres, preferably glass fibres and optionally fillers and further additives in which a quantity of a thermosetting resin having a lower viscosity is dispersed.

The thermosetting resins that can be applied are preferably alkenically unsaturated, crosslinkable polyesters, epoxy resins, resol resins, saturated polyester resins, melamine resins, acrylate resins, polyurethane resins, diallyl phthalate resins alone or combined and whether or not in combination with alkenically unsaturated monomers and/or prepolymers.

By preference are applied: alkenically unsaturated, crosslinkable polyesters, epoxy resins, acrylate resins, diallylphthalate resins alone or combined, in combination with alkenically unsaturated monomers and/or prepolymers.

2

Examples of alkenically unsaturated crosslinkable polyesters are polycondensation products of polyvalent alcohols, such as propylene glycol, ethylene glycol, diethylene glycol, pentanediol, butanediol, butylene glycol, dipropylene glycol and polyvalent unsaturated acids like maleic acid, phthalic acid, itaconic acid, isophthalic acid, adipic acid and fumaric acid or acid-forming anhydrides hereof.

Examples of alkenically unsaturated monomers are styrene, substituted styrenes such as vinyltoluene or tert.butylstyrene, ($C_2$-$C_4$)-alkylesters of acrylic acid and methacrylic acid, $\alpha$-methylstyrene, cyclic acrylates and methacrylates, halogenated styrenes, 1-3-butanedioldimethacrylate and diallyl phthalate.

According to a preferred mode of realizing the invention a mixture of

a. a partly cured resin based on an alkenically unsaturated crosslinkable polyester, and

b. a solid resin based on an alkenically unsaturated crosslinkable polyester optionally in combination with a solid monomer with at least two alkenic unsaturations per molecule and/or a prepolymer thereof can be used.

Solid resin is understood to mean a resin solid at room temperature, based on for instance the said alkenically unsaturated bondable polyester. Crystalline resins in particular are very suitable.

Examples of solid monomers with at least two alkenic unsaturations per molecule are triallyl cyanurate, triallyl isocyanurate and epoxy acrylates.

For the purpose of obtained special effects in respect of the physical properties the glass fibre can optionally be replace in whole or in part by carbon fibre, sisal, jute, asbestos, cotton, organic synthetic fibres, such as polyamide, polyester, polypropylene or polyethylene, inorganic fibres such as quartz and beryllium and other metal fibres. The fibres may be present also in the form of continuous fibres or of a fibre mat, which is kept together by a suitable bonding agent, or in the form of chopped continuous filaments without binding agent. The length of the fibres used, particularly of the glass fibres, may range from 0.5 mm to 50 mm.

The fibre may be added in amounts of up to 80 % (wt) (calculated on the total compound).

The fillers that can be used may be, for instance, marl, antimony trioxide, silica flour, coconut shell flour, talcum, calcium carbonate, silicon oxide, clay, calcium silicate, wood flour, glass beads, titanium dioxide, aluminium silicate, aluminium hydrate, carbon black or gypsum anhydrite. The filler content incorporated may range from 5 to 70 % (wt).

The catalyst applied may be, for instance, tert.butylperbenzoate, benzoyl peroxide, tert.butylperoxide, tert.butylperoctoate, di-tert.butylperoctoate, cyclohexanone peroxide, methylethylketone peroxide, acetylacetone peroxide or lauroylperoxide. Inhibitors, too, are often used to provide sufficient stability of the moulding compound at ambient temperature before the moulding process. The inhibitors also leave enough time for the flowing into the mould before the gelling commences. Examples of such inhibitors are hydroquinone and p-benzoquinone.

Examples of accelerators are octoates, naphthenates and amines, such as cobaltoctoate, dimethylaniline, diethylaniline and dimethyl paratoluidine.

Other additives are, for example, release agents such as the stearates of zinc, calcium or aluminium, phosphates, silicons, polyvinylalcohol and waxes.

Further, usual low-profile additives such as, for instance, thermoplastics, can be added. Examples of thermoplastics are homopolymers of methylmethacrylate, ethylmethacrylate and butylmethacrylate, methylacrylate and ethylacrylate, styrene, copolymers of methylmethacrylate and other low-molecular weight alkylacrylates and alkylmethacrylates and copolymers of methylmethacrylate with small amounts of one or more of the following monomers: laurylmethacrylate, isobornylmethacrylate, acrylamide, hydroxyethylmethacrylate, styrene, 2-ethylhexylacrylate, acrylonitrile, methacrylic acid, methacrylamide, methylolacrylamide and cetylstearylmethacrylate, copolymers of styrene and acrylonitrile, copolymers of vinylchloride and vinylacetate, cellulose acetatebutyrate, cellulose acetateproprionate and styrene maleic anhydride copolymer.

The moulding compounds can be thickened physically or chemically with usual thickeners such as, for instance, with metal oxides such as magnesium oxide or with metal hydroxides.

Further, the usual pigments or colourants can be added.

The invention can be performed in a lot of different ways, of which some will be described here, without limiting the scope of the invention.

A first, partly cured resin can e.g. be prepared by impregnation of one or more glass fleeces, after which the resin is partly cured by applying electron beam radiation or by curing with the aid of an U.V. sensitive catalyst system and U.V. light. Another method is heating the resin or by exposing the resin to I.R. radiation in order to heat the resin, and initiate he curing with a catalyst that is very sensitive to heat, e.g. hydrogen peroxide. The resulting sheet is chopped to particles with a length of e.g. 0,5 mm to 5 cm and with a width of e.g. 0.5 mm to 0.5 cm. So, the ultimate partly cured resin consists of dry rubbery particles that show a very good stability in time. Thus, they can be retained on stock for over 1/2 year at 20-24°C without further curing. When applying these particles in a mould, still some flowing of the resin is seen. In an analogous way, glass fibres can be put through a bath with thermosetting resin and after that the resin can be cured partly, with e.g. U.V. radiation. The coated fibre can be chopped to particles with a length of 0.5 mm - 5 cm.

A second polyester is applied e.g. as follows. The particles of partly cured resin with glass fibre, are coated with a crystalline resin with a melting point of 70⊐C in a bath in which such a melted resin is present. After cooling, by e.g. air, dry, free flowing particles are obtained, with very good keeping stability. In a second way, the second thermosetting resin comprises a crystalline unsaturated polyester, and a mixture of a normal unsaturated polyester with styrene. Such a mixture has a wax-like performance at room temperature. The partly cured particles are dispersed in such a second resin mixture and the resulting mixture is easily applied as a BMC or DMC. Otherwise, a common thermosetting polyester is used, which is thickened with MgO paste, after coating the particles or partly cured resin with such a common resin.

Furhermore it is possible, to use a mixture of partly cured resin with glass fibres and an unsaturated polyester together with MgO in making an SMC, by applying the mixture on a polyethylene sheet, as long as the second resin is fluid, and let the sheet thicken.

The first and the second thermosetting resin comprises among other additives, a catalyst system, by which the mixture can be used in a final cure.

Using the moulding compounds according to the invention, it is possible to make moulded articles with a smooth surface and without pores. Surfaces can be obtained equalling those obtained in the painting of steel. The physical properties of the moulded articles obtained with the moulding compounds according to the invention are also excellent.

The moulding compounds according to the invention can be used in the automobile industry, as moulded articles for open-air application, office equipment, etc.

The invention is further elucidated by means of the following example without, however, being limited thereto.

Example

**Resin A: A resin compound A is composed as follows:**

- 60 parts by weight unsaturated polyester resin as 60 % solution in styrene (Synolite TP 846-VG, DSM Resins)
- 40 parts by weight polyvinylacetate as 40 % solution in styrene
- 150 parts by weight calciumcarbonate
- 3 parts by weight titanium dioxide
- 3.8 parts by weight magnesium oxide
- 100 ppm parabenzoquinone
- 1.25 parts by weight tertiary butylperbenzoate
- 0.1 parts by weight cobaltoctoate (1 %)
- 77 parts by weight glass fibres (25 mm)

**Resin B: Resin A was partly cured with hydrogen peroxide.**

The viscosity of this resin compound (measured at 20⊐C with a Brookfield viscometer type HBT) without glass fibre after 24 hours is 120,000 Pas.

4

Resin C: Resin compound C is obtained by mixing:

- 100    parts by weight crystalline polyester resin (Synolite PR 7561
         DSM Resins)
- 3      parts by weight triallylcyanurate
- 5      parts by weight titaniumdioxide
- 1.5    parts by weight tertiary butylperbenzoate
- 3      parts by weight zinc stearate

in the melt at 80¤C, while after incorporation of the catalyst tertiary butylperbenzoate the mixture is rapidly cooled.

The viscosity of this resin compound is 1.6 Pas (measured at 150¤C with a Brookfield viscometer type HBT).

Subsequently, after the preparation of a resin compound B resin compound C is added in such a weight that the mixing ratio between resin compound B and resin compound C is 7 : 3.

Moulded articles with a moulding compound based on resin compound A and resin compound B show virtually no pores and have an excellent smoothness of the surface.

Comparative example

The surface of a moulded article based on resin compounds A or B, were porous.

**Claims**

1. Moulding compound based on thermosetting resin material, fibres and optionally fillers, curing catalysts and further usual additives, characterised in that the moulding compound comprises a mixture of at least two thermosetting resins of which the first one, being coated on the fibres, is in a partly cured state with a viscosity higher than 50000 Pa • s (measured at 20°C) and dispersed therein, a second resin which is not, or less than the first resin, in a partly cured state with a viscosity lower than 10 Pa • s (measured at 105°C).

2. Moulding compound according to claim 1, characterized in that the viscosity of the partly cured resin is between 50,000 and 1,000,000 Pa • s (measured at 20°C) and the viscosity of the other resin is between 0.5 and 100 Pa • s (measured at 150°C).

3. Moulding compound according to claim 2, characterized in that the viscosity of the partly cured resin is between 100,000 and 500,000 Pa • s (measured at 20°C) and the viscosity of the other resin is between 1 and 10 Pa • s (measured at 150°C).

4. Moulding compound according to any one of claims 1–3, characterized in that the two thermosetting resins are used in a weight ratio between 5:95 and 95:5.

5. Moulding compound according to claim 4, characterized in that the two thermosetting resins are used in a weight ratio between 1:4 and 4:1.

6. Moulding compound according to any one of claims 1–7, characterized in that it has the form of a Sheet Moulding Compound, Bulk Moulding Compound, Dough Moulding Compound, moulding powder, moulding granulates or moulding flakes.

7. Moulding compound according to claim 6, characterized in that it consists of a mixture consisting of free-flowing solid particles of partly cured thermosetting resin with fibre, and optionally with fillers, curing catalysts and further usual additives and free-flowing solid particles of a powdery thermosetting resin with optionally fillers, curing catalysts and further usual additives with a viscosity lower than that of the particles of the partly cured thermosetting resin.

8. Moulding compound according to claim 7, characterized in that the powdery thermosetting resin with optionally fillers, curing catalysts and further usual additives shows a higher curing reactivity than the partly cured thermosetting resin with fibres, and with optionally fillers and further usual additives.

9. Moulding compound according to any one of claims 1–8, characterized in that the thermosetting resins applied are alkenically unsaturated crosslinkable polyesters, epoxy resins, resol resins, melamine resins, diallyl phthalate resins, saturated polyester resins, acrylate resins, polyurethane resins, alone or combined and whether or not in combination with alkenically unsaturated monomers and/or prepolymers.

10. Moulding compound according to any one of claims 1–9, characterized in that a mixture is used of
a. a partly cured resin based on an alkenically unsaturated monomer and an alkenically unsaturated crosslinkable polyester, and
b. a solid resin based on an alkenically unsaturated, crosslinkable polyester, optionally in combination with a solid monomer with at least two alkenic unsaturations per molecule and/or a prepolymer thereof.

## Patentansprüche

1. Formmasse auf Basis von wärmehärtendem Harzmaterial, Fasern und gewünschtenfalls Füllstoffen, Aushärtungskatalysatoren und weiteren gebräuchlichen Zusätzen, dadurch gekennzeichnet, daß die Formmasse eine Mischung von wenigstens zwei wärmehärtenden Harzen umfaßt, von denen das erste, das auf die Fasern aufgetragen ist, in einem teilweise ausgehärteten Zustand mit einer Viskosität über 50 000 Pa • s (bei 20°C gemessen) vorliegt und in dem ein zweites Harz verteilt ist, welches nicht oder weniger als das erste Harz in einem teilweise ausgehärteten Zustand, mit einer Viskosität unter 100 Pa • s (bei 150°C gemessen), vorliegt.

2. Formmasse nach Anspruch 1, dadurch gekennzeichnet, daß die Viskosität des teilweise ausgehärteten Harzes zwischen 50 000 und 1 000 000 Pa • s (bei 20°C gemessen) beträgt und die Viskosität des anderen Harzes zwischen 0,5 und 100 Pa • s (bei 150°C gemessen) beträgt.

3. Formmasse nach Anspruch 2, dadurch gekennzeichnet, daß die Viskosität des teilweise ausgehärteten Harzes zwischen 100 000 und 500 000 Pa • s (bei 20°C gemessen) und die Viskosität des anderen Harzes zwischen 1 und 10 Pa • s (bei 150°C gemessen) beträgt.

4. Formmasse nach einem der Ansprüche 1 bis 3, dadurch gekennzeichnet, daß die beiden wärmehärtenden Harze in einem Masseverhältnis zwischen 5:95 und 95:5 verwendet werden.

5. Formmasse nach Anspruch 4, dadurch gekennzeichnet, daß die beiden wärmehärtenden Harze in einem Masseverhältnis zwischen 1:4 und 4:1 verwendet werden.

6. Formmasse nach einem der Ansprüche 1 bis 5, dadurch gekennzeichnet, daß sie die Form einer Harzmatte, einer Stückgutformmasse, einer Teigformmasse, von Formpulver, von Formgranulaten oder von Formflocken hat.

7. Formmasse nach Anspruch 6, dadurch gekennzeichnet, daß sie aus einer Mischung besteht, die aus frei fließenden festen Teilchen eines teilweise ausgehärteten wärmehärtenden Harzes mit Fasern und gewünschtenfalls mit Füllstoffen, Aushärtungskatalysatoren und weiteren gebräuchlichen Zusätzen, und frei fließenden festen Teilchen eines pulverförmigen, wärmehärtenden Harzes, gewünschtenfalls mit Füllstoffen, Aushärtungskatalysatoren und weiteren gebräuchlichen Zusätzen, mit einer Viskosität, die geringer ist als die der Teilchen des teilweise ausgehärteten wärmehärtenden Harzes, besteht.

8. Formmasse nach Anspruch 7, dadurch gekennzeichnet, daß das pulverförmige, wärmehärtende Harz, gewünschtenfalls mit Füllstoffen, Aushärtungskatalysatoren und weiteren gebräuchlichen Zusätzen, eine höhere Aushärtungsreaktivität aufweist als das teilweise ausgehärtete wärmehärtende Harz mit Fasern und gewünschtenfalls mit Füllstoffen und weiteren gebräuchlichen Zusätzen.

9. Formmasse nach einem der Ansprüche 1 bis 8, dadurch gekennzeichnet, daß die eingesetzten wärmehärtenden Harze alkenisch ungesättigte, vernetzbare Polyester, Epoxharze, Resolharze, Melaminharze, Diallylphthalatharze, gesättigte Polyesterharze, Acrylharze, Polyurethanharze, allein oder kombiniert und gegebenenfalls in Kombination mit alkenisch ungesättigten Monomeren und/oder Vorpolymeren, sind.

10. Formmasse nach einem der Ansprüche 1–9, dadurch gekennzeichnet, daß eine Mischung
a) eines teilweise ausgehärteten Harzes auf Basis eines alkenisch ungesättigten Monomers und eines alkenisch ungesättigten vernetzbaren Polyesters und
b) eines festen Harzes auf Basis eines alkenisch ungesättigten vernetzbaren Polyesters, gewünschtenfalls in Verbindung mit einem festen Monomer mit wenigstens zwei alkenisch ungesättigten Stellen pro Molekül und/oder einem Vorpolymer davon
verwendet wird.

## Revendications

1. Composé de moulage basé sur une matière de résine thermodurcissable, des fibres et d'autres charges optionnelles, des catalyseurs de durcissement et d'autres additifs utiles, caractérisé en ce que le composé de moulage comprend un mélange d'au moins deux résines thermodurcissables dont la première, étant couchée sur les fibres, est à l'état partiellement durci avec une viscosité supérieure à 50 000 Pa • s (mesurée à 20°C), et dont la seconde, qui n'est pas à l'état partiellement durci ou qui est à l'état moins durci que la première résine, a une viscosité inférieure à 100 Pa • s (mesurée à 150°C), est dispersée dans le composé.

2. Composé de moulage selon la revendication 1, caractérisé en ce que la viscosité de la résine partiellement durcie est comprise entre 50 000 et 1 000 000 Pa • s (mesurée à 20°C) et en ce que la viscosité de l'autre résine est comprise entre 0,5 et 100 Pa• s (mesurée à 150°C).

6

3. Composé de mélange selon la revendication 2, caractérisé en ce que la viscosité de la résine partiellement durcie est comprise entre 100 000 et 500 000 Pa • s (mesurée à 20°C) et en ce que la viscosité de l'autre résine est comprise entre 1 et 10 Pa • s (mesurée à 150°C).

4. Composé de moulage selon l'une quelconque des revendications 1 à 3, caractérisé en ce que les deux résines thermodurcissables sont utilisées suivant un rapport pondéral compris entre 5:95 et 95:5.

5. Composé de moulage selon la revendication 4, caractérisé en ce que les deux résines thermodurcissables sont utilisées suivant un rapport pondéral compris entre 1:4 et 4:1.

6. Composé de moulage selon l'une quelconque des revendications 1 à 5, caractérisé en ce qu'il est sous la forme d'un composé de moulage en feuille, d'un composé de moulage en vrac, d'un composé de moulage farineux, d'une poudre de moulage, de granulats de moulage, ou de flocons de moulage.

7. Composé de moulage selon la revendication 6, caractérisé en ce qu'il est constitué d'un mélange constitué de particules solides à écoulement libre de résine thermodurcissable partiellement durcie avec des fibres, et si désiré avec des charges, des catalyseurs de durcissement et d'autres additifs usuels et des particules solides à écoulement libre d'une résine thermodurcissable poudreuse avec des charges optionnelles, des catalyseus de durcissement et d'autres additifs usuels avec une viscosité inférieure à celle des particules de la résine thermodurcissable partiellement durcie.

8. Composé de moulage selon la revendication 7, caractérisé en ce que la résine thermodurcissable poudreuse avec des charges optionnelles, des catalyseurs de durcissement et d'autres additifs usuels, présente une réactivité de durcissement supérieure à celle de la résine thermodurcissable partiellement durcie avec les fibres et avec les charges optionnelles et les autres additifs usuels.

9. Composé de moulage selon l'une quelconque des revendications 1 à 8, caractérisé en ce que les résines thermodurcissables utilisées sont des résines époxy, polyesters réticulables, alcéniquement non saturées, des résines résol, des résines mélamine, des résines de diallyl phtalate, des résines polyester saturées, des résines acrylate, des résines polyuréthane, seules ou combinées et en combinaison ou non avec des monomères non saturés alcéniquement et/ou des prépolymères.

10. Composé de moulage selon l'une quelconque des revendications 1 à 9, caractérisé en ce qu'on utilise un mélange de:

a) une résine partiellement durcie basée sur un monomère non saturé alcéniquement et un polyester réticulable saturé alcéniquement, et

b) une résine solide basée sur un polyester réticulable non saturé alcéniquement, optionnellement en combinaison avec un monomère solide ayant au moins deux insaturations alcéniques par molécule et/ou un prépolymère de ce monomère.